# EUROPEAN PATENT SPECIFICATION

(11) **EP 3 884 407 B1**
(45) Date of publication and mention of the grant of the patent: **25.10.2023**
(21) Application number: 20759703.0
(22) Date of filing: 17.02.2020
(51) Int. Cl.: G06F 21/32, G06F 21/45, G06Q 20/40, H04L 9/40

(54) **ELECTRONIC DEVICE FOR AUTHENTICATING BIOMETRIC INFORMATION AND OPERATING METHOD THEREOF**
ELEKTRONISCHE VORRICHTUNG ZUR AUTHENTIFIZIERUNG VON BIOMETRISCHEN INFORMATIONEN UND STEUERUNGSVERFAHREN DAFÜR
DISPOSITIF ÉLECTRONIQUE PERMETTANT D'AUTHENTIFIER DES INFORMATIONS BIOMÉTRIQUES ET SON PROCÉDÉ DE FONCTIONNEMENT

(30) Priority: 18.02.2019 KR 20190018831
(43) Date of publication of application: 29.09.2021
(73) Proprietor: Samsung Electronics Co., Ltd., Suwon-si, Gyeonggi-do 16677 (KR)
(72) Inventor: CHANG, Moonsoo, Suwon-si Gyeonggi-do 16677 (KR); SANDHAN, Tushar Balasaheb, Suwon-si Gyeonggi-do 16677 (KR); LEE, Yangsoo, Suwon-si Gyeonggi-do 16677 (KR); KIM, Minho, Suwon-si Gyeonggi-do 16677 (KR); YANG, Hyeongwook, Suwon-si Gyeonggi-do 16677 (KR); YOO, Juwoan, Suwon-si Gyeonggi-do 16677 (KR); LEE, Dasom, Suwon-si Gyeonggi-do 16677 (KR)
(74) Representative: HGF
(86) International application number: PCT/KR2020/002251
(87) International publication number: WO 2020/171516

(56) References cited:
- KR-A- 20150 029 254
- US-A1- 2008 212 846
- US-A1- 2010 162 386
- US-A1- 2015 067 827
- US-A1- 2015 081 295
- US-A1- 2016 147 987
- US-A1- 2016 328 596

## Description

### Technical Field

The disclosure relates to an electronic device for determining a matching model used to authenticate biometric information, and an operating method thereof.

### Background Art

Portable electronic devices such as smartphones provide various and complicated financial services such as purchase and payment of goods, deposit/withdrawal and money transfer services, or the like, in addition to basic services such as phone calls, texting, or the like.

In the financial service provided via the portable electronic device, an authentication scheme used for user verification and payment is being evolved from a scheme of using a numeral, a code, or a pattern to a scheme of using user's biometric information (e.g., a fingerprint, etc.).

The electronic device may perform biometric authentication by receiving biometric information of a user and comparing (or matching) the received user's biometric information with user's reference biometric information pre-stored in a database. The pre-stored user's reference biometric information may be biometric information which is initially input by the user (e.g., when the biometric information is enrolled). In addition, the electronic device may change the user's reference biometric information pre-stored in the database based on the received biometric information after the enrollment (e.g., when the biometric information is authenticated). This is because the user's biometric information is not guaranteed to receive the same information every time, unlike the numeral, code, or pattern information. However, when the user's reference biometric information pre-stored in the database is changed based on the received biometric information after the enrollment, recognition performance may be degraded or vulnerable to a spoofing attack. US2010/162386 and US2016/147987 each disclose an electronic device capable of performing biometric authentication.

### Disclosure of Invention

### Solution to Problem

An electronic device according to various embodiments of the disclosure may include a biometric sensor, and a processor operatively coupled with the biometric sensor. The processor may be configured to identify a security level of a service requested to be executed, determine a confidence level of user's biometric data received via the biometric sensor, determine a matching model to be used to authenticate the received user's biometric data based on the identified security level and the determined confidence level, and authenticate the received user's biometric data based on the determined matching model.

A method of operating an electronic device according to various embodiments of the disclosure may include identifying a security level of a service requested to be executed, determining a confidence level of user's biometric data, determining a matching model to be used to authenticate the user's biometric data based on the identified security level and the determined confidence level, and authenticating the received user's biometric data based on the determined matching model.

An electronic device according to various embodiments of the disclosure may include a biometric sensor, a memory which stores enrolled biometric data, and a processor operatively coupled with the biometric sensor and the memory. The processor may be configured to receive user's biometric data via the biometric sensor, determine classification information of the user's biometric data, identify classification information of the enrolled biometric data, determine a matching model to be used to authenticate the user's biometric data based on the determined classification information and the identified classification information, and authenticate the user's biometric data based on the determined matching model.

Before undertaking the DETAILED DESCRIPTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely.

Moreover, various functions described below can be implemented or supported by one or more computer programs, each of which is formed from computer readable program code and embodied in a computer readable medium. The terms "application" and "program" refer to one or more computer programs, software components, sets of instructions, procedures, functions, objects, classes, instances, related data, or a portion thereof adapted for implementation in a suitable computer readable program code. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive, a compact disc (CD), a digital video disc (DVD), or any other type of memory. A "non-transitory" computer readable medium excludes wired, wireless, optical, or other communication links that transport transitory electrical or other signals. A non-transitory computer readable medium includes media where data can be permanently stored and media where data can be stored and later overwritten, such as a rewritable optical disc or an erasable memory device.

Definitions for certain words and phrases are provided throughout this patent document, those of ordinary skill in the art should understand that in many, if not most instances, such definitions apply to prior, as well as future uses of such defined words and phrases.

### Brief Description of Drawings

For a more complete understanding of the present disclosure and its advantages, reference is now made to the following description taken in conjunction with the accompanying drawings, in which like reference numerals represent like parts:
FIG. 1 is a block diagram of an electronic device in a network environment according to various embodiments of the disclosure;
FIG. 2 illustrates an interaction between a user and an electronic device according to various embodiments of the disclosure;
FIG. 3 illustrates an interaction between a user and an electronic device according to various embodiments of the disclosure;
FIG. 4 illustrates a diagram for describing a biometric data template configuration corresponding to each of a plurality of matching models according to various embodiments of the disclosure;
FIG. 5 illustrates a block diagram of an electronic device according to various embodiments of the disclosure;
FIG. 6 illustrates a diagram for describing a data flow in an electronic device according to various embodiments of the disclosure;
FIG. 7 is a flowchart illustrating an operation of an electronic device according to various embodiments of the disclosure;
FIG. 8 is a flowchart illustrating a detailed operation of an electronic device for identifying a security level of a service requested to be executed according to various embodiments of the disclosure;
FIG. 9 is a flowchart illustrating an operation of an electronic device for determining a matching model based on an identified security level and a determined confident level according to various embodiments of the disclosure;
FIG. 10 is a flowchart illustrating a detailed operation of an electronic device for performing biometric authentication of input biometric data based on a determined matching model according to various embodiments of the disclosure;
FIG. 11 is a flowchart illustrating a detailed operation of an electronic device for performing biometric authentication of input biometric data based on a determined matching model according to various embodiments of the disclosure;
FIG. 12 is a flowchart illustrating a detailed operation of an electronic device for managing input biometric data after performing biometric authentication of the input biometric data according to various embodiments of the disclosure;
FIG. 13 is a flowchart illustrating a detailed operation of an electronic device for managing input biometric data after performing biometric authentication of the input biometric data according to various embodiments of the disclosure;
FIG. 14 is a flowchart illustrating an operation of an electronic device according to various embodiments of the disclosure; and
FIG. 15 is a flowchart illustrating an operation of an electronic device according to various embodiments of the disclosure.

### Best Mode for Carrying out the Invention

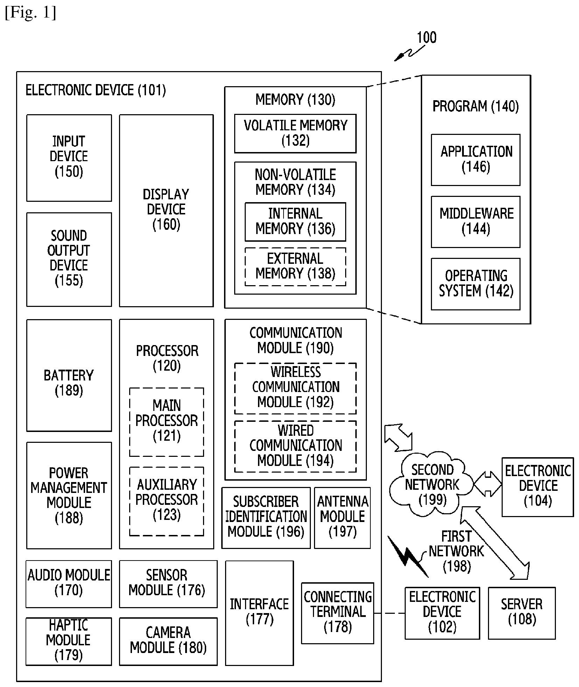

FIGS. 1 through 15, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged system or device.

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input device 150, a sound output device 155, a display device 160, an audio module 170, a sensor module 176, an interface 177, a haptic module 179, a camera module 180, a power management module 188, a battery 189, a communication module 190, a subscriber identification module(SIM) 196, or an antenna module 197. In some embodiments, at least one (e.g., the display device 160 or the camera module 180) of the components may be omitted from the electronic device 101, or one or more other components may be added in the electronic device 101. In some embodiments, some of the components may be implemented as single integrated circuitry. For example, the sensor module 176 (e.g., a fingerprint sensor, an iris sensor, or an illuminance sensor) may be implemented as embedded in the display device 160 (e.g., a display).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may load a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), and an auxiliary processor 123 (e.g., a graphics processing unit (GPU), an image signal processor (ISP), a sensor hub processor, or a communication processor (CP)) that is operable independently from, or in conjunction with, the main processor 121. Additionally or alternatively, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display device 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input device 150 may receive a command or data to be used by other component (e.g., the processor 120) of the electronic device 101, from the outside (e.g., a user) of the electronic device 101. The input device 150 may include, for example, a microphone, a mouse, a keyboard, or a digital pen (e.g., a stylus pen).

The sound output device 155 may output sound signals to the outside of the electronic device 101. The sound output device 155 may include, for example, a speaker or a receiver. The speaker may be used for general purposes, such as playing multimedia or playing record, and the receiver may be used for an incoming calls. According to an embodiment, the receiver may be implemented as separate from, or as part of the speaker.

The display device 160 may visually provide information to the outside (e.g., a user) of the electronic device 101. The display device 160 may include, for example, a display, a hologram device, or a projector and control circuitry to control a corresponding one of the display, hologram device, and projector. According to an embodiment, the display device 160 may include touch circuitry adapted to detect a touch, or sensor circuitry (e.g., a pressure sensor) adapted to measure the intensity of force incurred by the touch.

The audio module 170 may convert a sound into an electrical signal and vice versa. According to an embodiment, the audio module 170 may obtain the sound via the input device 150, or output the sound via the sound output device 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a cellular network, the Internet, or a computer network (e.g., LAN or wide area network (WAN)). These various types of communication modules may be implemented as a single component

(e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., PCB). According to an embodiment, the antenna module 197 may include a plurality of antennas. In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 and 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, or client-server computing technology may be used, for example.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101) . For example, a processor(e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to a non-claimed example, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

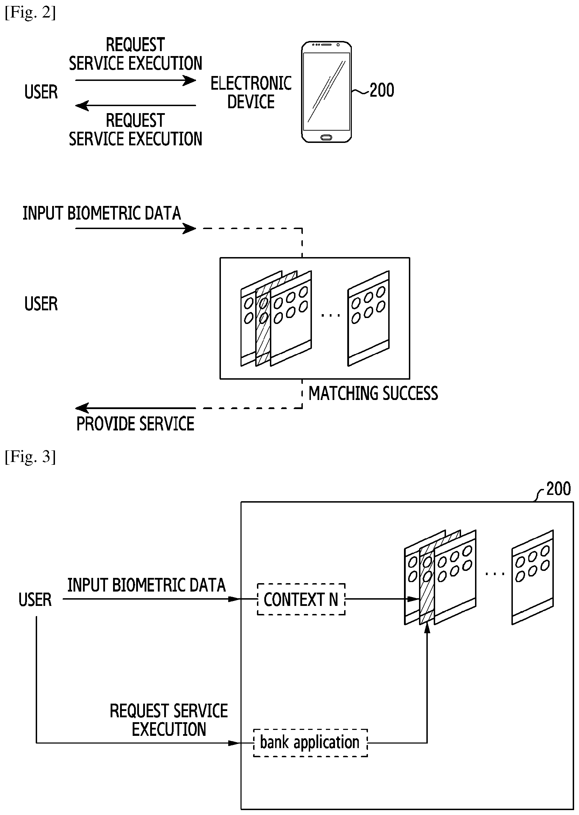

FIG. 2 illustrates an interaction between a user and an electronic device according to various embodiments of the disclosure.

Referring to FIG. 2, an electronic device 200 may perform an interaction with a user. The electronic device 200 may correspond to the electronic device 101 of FIG. 1.

In an embodiment, the electronic device 200 may receive an execution request of a specific service (or function) (e.g., application) from a user.

In an embodiment, the electronic device 200 may request the user to perform biometric authentication to execute the service in response to the execution request. For example, the electronic device 200 may drive a camera (e.g., the camera module 180 of FIG. 1), and may output a notification for requesting to position a user's face at a camera screen. For another example, the electronic device 200 may output a notification for requesting to position a user's finger at a fingerprint sensor (e.g., the sensor module 176 of FIG. 1) included in the electronic device 200.

In an embodiment, the electronic device 200 may receive biometric data which is input from the user via a biometric sensor (e.g., the sensor module 176 of FIG. 1). The electronic device 200 may authenticate input biometric data, based on a request obtained by inputting the received biometric data (hereinafter, 'input biometric data') to a designated statistical model or engine. The designated statistical model or engine may be a model or engine (hereinafter, a 'matching model') stored in a memory (e.g., the memory 130 of FIG. 1) of the electronic device 200 and used to authenticate biometric data (e.g., to identify whether the input biometric data is matched with stored biometric data).

In an embodiment, if the input biometric data is authenticated (if the input biometric data is matched with the stored biometric data), the electronic device 200 may provide the user with the specific service requested to be executed.

FIG. 3 illustrates an interaction between a user and an electronic device according to various embodiments of the disclosure.

According to the invention, the electronic device 200 stores a plurality of matching models, which are used to authenticate biometric data, in a memory (e.g., the memory 130 of FIG. 1). One matching model corresponds to at least one biometric data template. The data template may imply user's biometric data (e.g., a fingerprint image) previously input and stored in the electronic device, and includes biometric data (or a first biometric data template) which is input when biometric information is enrolled and biometric data (or a second biometric data template) which is input when biometric authentication is attempted.

In an embodiment, a quality level of the matching model may be determined according to the number of corresponding biometric data templates or a confidence level of the corresponding biometric data template.

In another embodiment, a feature (e.g., a specified portion) of the matching model may be determined according to the number of corresponding biometric data templates or a common feature (e.g., in case of fingerprint data, a skin feature, a feature related to an environment in which biometric data is input) of the corresponding biometric data template.

The electronic device 200 determines one matching model to be used to authenticate input biometric data among a plurality of stored matching models. The electronic device 200 may determine one matching model to be used to authenticate the input biometric data among the plurality of stored matching model, based on at least one of a type of a service requested to be executed by the user (or a security level determined according to the type of the service) and information on a confidence level of the input biometric data.

The electronic device 200 determines one matching model to be used to authenticate the input biometric data among the plurality of stored matching models, based on information on a security level used by the service requested to be executed by the user. For example, if the security level used by the service requested to be executed is a designated value (e.g., a security level 'high', when the security level is classified into 'high', 'middle', and 'low'), the electronic device may determine one matching model having a designated quality level corresponding to (or coinciding with or including) the designated security level value.

The electronic device 200 determines one matching model to be used to authenticate the input biometric data among the plurality of stored matching models, based on both information on the security level used by the service requested to be executed by the user and context information of the input biometric data. The electronic device 200 may determine the context information of the input biometric data (or related to the input biometric data) while receiving the input biometric data (or after receiving the input biometric data), and may determine one matching model based on service security level information and the determined context information. The context information of the input biometric data does include at least one of confidence information (or a confidence level) indicating data quality of the input biometric data or a correlation with hacking or spoofing and environment information regarding an environment (e.g., an illumination environment) in which the input biometric data is input or regarding a state of a related body part (e.g., a wet state or a dry state).

For example, if the security level used by the service requested to be executed is a designated value (e.g., a security level 'middle' among the security levels), the electronic device may determine at least one matching model having a designated quality level corresponding to a designated security level value, and may determine one matching model among the determined at least one matching model based on the information on the confidence level of the input biometric data.

In another embodiment, the electronic device 200 may determine one matching model to be used to authenticate the input biometric data among the plurality of stored matching models, based on the information on context of the input biometric data. For example, if a skin feature related to the input biometric data is a dry skin feature, the electronic device 200 may determine a matching model corresponding to the dry skin feature (or a matching model specialized for the dry skin feature) among the plurality of stored matching models.

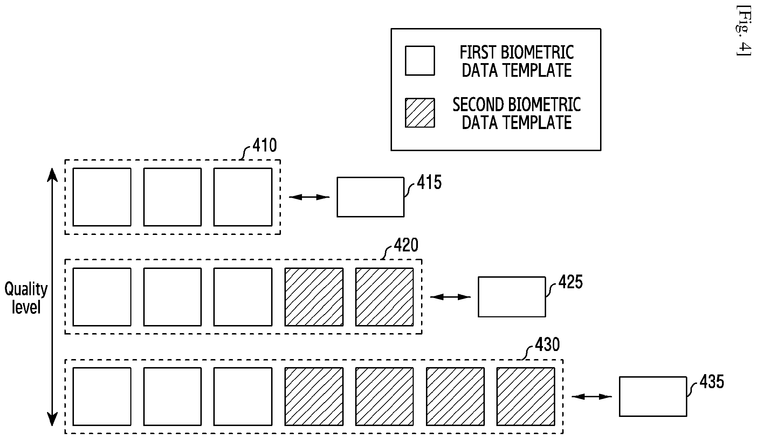

FIG. 4 illustrates a diagram for describing a biometric data template configuration corresponding to each of a plurality of matching models according to various embodiments of the disclosure.

Referring to FIG. 4, a biometric data template configuration corresponding to each of a plurality of matching models according to a quality level is disclosed. Although 3 matching models (a matching model A 415, a matching model B 425, and a matching model C 435) based on 3 quality levels (e.g., high, middle, and low) and biometric data template configurations 410, 420, and 420 respectively corresponding to the 3 matching models are disclosed in FIG. 4, the numeral is not intended to limit the scope of the disclosure.

In an embodiment, the quality level of the matching model uses discrete level information to express quality of the matching level, and may be expressed as a numeric level or a non-numeric level such as high, middle, and low. For example, the matching model A 415, the matching model B 425, and the matching model C 435 may respectively correspond to the quality levels 'high', 'middle', and 'low'.

In an embodiment, the biometric data template configurations 410, 420, and 430 corresponding to the 3 matching models may include at least one biometric data template previously input and stored in a memory (e.g., the memory 130 of FIG. 1) of an electronic device (e.g., the electronic device 101 of FIG. 1). For example, each of the biometric data template configurations 410, 420, and 430 may include at least one biometric data template, i.e., a first biometric data template which is input when biometric information is enrolled and/or a second biometric data template which is input after the biometric information is enrolled (e.g., when biometric authentication is attempted). In the figure, the second biometric data template may be indicated by a hatched symbol to distinguish it from the first biometric data template.

In an embodiment, all of the 3 matching models may include the first biometric data template which is input when the biometric information is enrolled. All of the 3 matching models may include the same first biometric data template configuration.

In an embodiment, the 3 matching models may or may not include at least one second biometric data template. For example, the matching model A 415 corresponding to the quality level 'high' may not include the second biometric data template, and the matching model B 425 corresponding to the quality level 'middle' and the matching model C 435 corresponding to the quality level 'low' may include at least one second biometric data template.

In an embodiment, matching models including at least one second biometric data may include different second biometric data template configurations. For example, the matching model B 425 corresponding to the quality level 'middle' and the matching model C 435 corresponding to the quality level 'low' may not include the same second biometric data template. For another example, any second biometric data template included in the matching model B 425 corresponding to the quality level 'middle' may not have a similarity greater than or equal to a designated value, with respect to any second biometric data template included in the matching model C 435 corresponding to the quality level 'low'.

In an embodiment, the quality level corresponding to the matching model may be determined according to a confidence level or quality of at least one second biometric data corresponding to the matching model. For example, the confidence level or quality of the biometric data may be determined based on at least any one of a data size of biometric data, a size of a region that cannot be used for authentication if the biometric data is a fingerprint image, a density of information included in a region that can be used for authentication (e.g., a distribution sharpness of a ridge or valley), and a value indicating a correlation with hacking or spoofing (e.g., an anti-spoofing level).

In an embodiment, the confidence level or quality of the biometric data template may be expressed within a specific range in a discrete or continual manner. In an embodiment, the confidence level or quality of the biometric data template may be expressed as numeric information such as 1 to 10 or non-numeric information such as high, middle, and low. In an embodiment, the confidence level or quality of at least one second biometric data template included in one matching model may belong to a designated range. For example, the confidence level or quality of at least one second biometric data template corresponding to the matching model B 425 may belong to a designated range (e.g., 4 to 6), and the confidence level or quality of at least one second biometric data corresponding to the matching model C 435 may belong to a designated range (e.g., 1 to 3).

In an embodiment, the quality level corresponding to the matching model may be determined according to a confidence level or quality of at least one first biometric data template corresponding to the matching model. In an embodiment, a quality level of a matching model (e.g., the matching model A 415) not corresponding to at least one second biometric data template may be determined according to a confidence level of corresponding at least one first biometric data template. The confidence level of the at least one first biometric data template included in one matching model may belong to a designated range. For example, a confidence level of at least one first biometric data template corresponding to the matching model A 415 may belong to a designated range (e.g., 7 to 10, or 'high' if it is classified into 'high', 'middle', and 'low'). Accordingly, a quality level (e.g., high) of the matching model A 415 may be determined. In general, the first biometric data template which is input when biometric information is enrolled has a higher quality than the second biometric data template which is input when biometric authentication is attempted. Therefore, the confidence level of the first biometric data template may be equal to or relatively higher than the confidence level of the second biometric data template.

In an embodiment, the quality level of the matching model and a security level used by a service requested to be executed may be expressed in the same format, or may be compatible, or may be able to set a mutual correspondence relationship. For example, a quality level 'high' of the matching model may correspond to a security level 'high' or a security level 'middle' or a security level 'low'. For another example, the quality level 'low' of the matching model may correspond to the security level 'low'. For example, the matching model A 415 corresponding to the quality level 'high' may be used for authentication of input biometric data, when it is requested to execute a service requiring the security level 'high', 'middle', or 'low'. The matching model B 425 corresponding to the quality level 'middle' may be used for authentication of input biometric data when it is requested to execute a service requiring the security level 'middle' or 'low', but may not be used for authentication of the input biometric data when it is requested to execute a service requiring the security level 'high'.

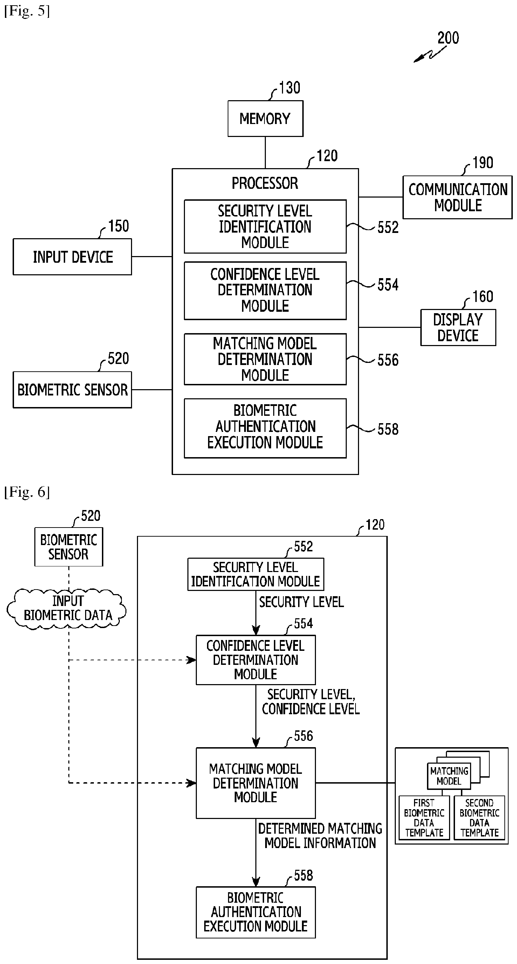

FIG. 5 illustrates a block diagram of an electronic device according to various embodiments of the disclosure.

Referring to FIG. 5, the electronic device 200 may include the input device 150, a biometric sensor 520, the display device 160, the memory 130, and the processor 120.

In an embodiment, the input device 150 may include an input interface so that data or content (e.g., text information, voice information) is input from a user. For example, the input device 150 may receive a user input for requesting execution of one application among a plurality of applications installed in the electronic device 200.

In an embodiment, the biometric sensor 520 may be used for inputting biometric information of the user. The biometric sensor 520 may correspond to the sensor module 176 of FIG. 1. The user's biometric information may include at least one of fingerprint information, iris information, a pupil image, and a face image.

In an embodiment, the biometric sensor 520 may include an image sensor or camera module (e.g., the camera module 180 of FIG. 1) capable of obtaining the user's iris image, pupil image, and face image.

In an embodiment, the display device 160 may visually display data or content to the user. The display device 160 may further include a touch circuit for receiving a user's touch input.

In an embodiment, the memory 130 may store an instruction (or a set of instructions or an application) for implementing various embodiments of the disclosure. In an embodiment, the memory 130 may store information on a plurality of matching models. For example, the memory 130 may store an instruction (or a set of instructions) for implementing the plurality of matching models. For another example, the memory 130 may store at least one biometric data template (a first biometric data template or a second biometric data template) respectively corresponding to the plurality of matching models.

In an embodiment, the memory 130 may store security level information. The memory 130 may store the security level information in a whitelist manner. The memory 130 may store a plurality of services that can be provided by the electronic device 200 and security level information corresponding thereto.

In an embodiment, the security level information stored in the memory 130 may be information determined by the user, or may be information determined regardless of the user (e.g., by a third party providing a specific application or a specific service).

In an embodiment, the communication interface 560 may exchange data with an external device (e.g., the server 108 of FIG. 1). For example, the communication interface may request the external device to provide security level information of a specific service to identify a security level of the specific service, and may receive the requested security level information, under the control of the processor 120.

In an embodiment, the processor 120 may provide overall control of the electronic device 200 for implementing various embodiments of the disclosure. The processor 120 may include a security level identification module 552, a confidence level determination module 554, a matching model determination module 556, and a biometric authentication execution module 558. The processor 120 may load instructions or data for performing at least one function or operation designated in each of the security level identification module 552, the confidence level determination module 554, the matching model determination module 556, and the biometric authentication execution module 558 into the memory 130 (e.g., the volatile memory 132), and may process the loaded instructions and data. The processor 120 may be operatively or electrically coupled with the input device 150, the biometric sensor 520, the display device 160, and the memory 130 to exchange data or signals.

In an embodiment, the security level identification module 552 may identify a security level of a service requested to be executed. The security level identification module 552 may identify a security level of a specific service, in response to receiving a signal for requesting execution of the specific service. In an embodiment, the security level identification module 552 may identify the security level of the specific service by referring to (or searching for) information stored in the memory 130 and indicating a correspondence relationship between the service and the security level. In another embodiment, the security level identification module 552 may identify the security level of the specific service, by referring to a configuration value or configuration information of the electronic device 200. In another embodiment, the security level identification module 552 may request authentication from an external server (e.g., a server related to providing of the service requested to be executed), and may identify the security level of the specific service based on authentication information received from the server.

In an embodiment, the confidence level determination module 554 may identify a confidence level (or a poison level) of input biometric data. The confidence level determination module 554 may determine the confidence level of the input biometric data, in response to receiving the input biometric data from the biometric sensor 520. In an embodiment, the confidence level of the input biometric data may imply a reliability indicating quality of the input biometric data or a correlation with hacking or spoofing. The confidence level of the input biometric data may be determined based on at least one of a data size of biometric data, a size of a region that cannot be used for authentication if the input biometric data is a fingerprint image, and a density of information included in a region that can be used for biometric authentication (e.g., a distribution sharpness of a ridge or valley). In another embodiment, the confidence level of the input biometric data may be determined based on an anti-spoofing level of the input biometric data if the input biometric data is image data (e.g., a fingerprint image, a face image). In another embodiment, the confidence level of the input biometric data may be determined after biometric authentication is performed. For example, if the biometric authentication of the input biometric data is successfully performed to execute a specific service, the confidence level of the input biometric data may be determined based on a security level corresponding to the specific service.

According to the invention, after the biometric authentication is performed, the identified biometric data is added (or stored) in a database (i.e., a biometric data template). The identified input biometric data is added to the database together with the confidence level of the input biometric data. The input biometric data added in the database functions as a biometric data template for another input biometric data to be input at a later time. The confidence level of the identified input biometric data may be identical to, or correspond to, the confidence level of the biometric data template. In an embodiment, the matching model determination module 556 may select (or determine) a matching model (or a biometric data template configuration). The matching model determination module 556 may select a matching model to be used for biometric authentication of the input biometric data based on the identified security level and the determined confidence level from among a plurality of matching models stored in the memory 130.

In an embodiment, the biometric authentication execution module 558 may perform the biometric authentication of the input biometric data. The biometric authentication execution module 558 may perform the biometric authentication of the input biometric data based on a matching model determined by the matching model determination module 556. Specifically, the biometric authentication execution module 558 may perform the biometric authentication of the input biometric data by comparing the input biometric data with a plurality of biometric data templates corresponding to the determined matching model.

FIG. 6 illustrates a diagram for describing a data flow in an electronic device according to various embodiments of the disclosure.

In an embodiment, the security level identification module 552 may operate independently of the biometric sensor 520. The security level identification module 552 may transmit to the confidence level determination module 554 a security level of a service requested to be executed. Although not shown, the security level identification module 552 may transmit to the matching model determination module 556, not the confidence level determination module 554, the security level of the service requested to be executed.

In an embodiment, the confidence level determination module 554 may operate in response to receiving input biometric data from the biometric sensor 520. The confidence level determination module 554 may transmit to the matching model determination module 556 the security level of the service requested to be executed and the confidence level of the input biometric data. Although not shown, the confidence level determination module 554 may transmit the determined confidence level to the matching model determination module 556.

In an embodiment, the matching model determination module 556 may determine one matching model among a plurality of matching models stored in the memory 130 based on the transmitted security level and confidence level. At least one of the plurality of matching models stored in the memory 130 may include a first biometric data template. At least one of the plurality of matching models stored in the memory 130 may include or may not include a second biometric data template.

In an embodiment, the matching model determination module 556 may transmit information on the determined matching model to the biometric authentication execution module 558. The biometric authentication execution module 558 may search the determined matching model from the memory 130, and may perform biometric authentication of input biometric data based on the determined matching model.

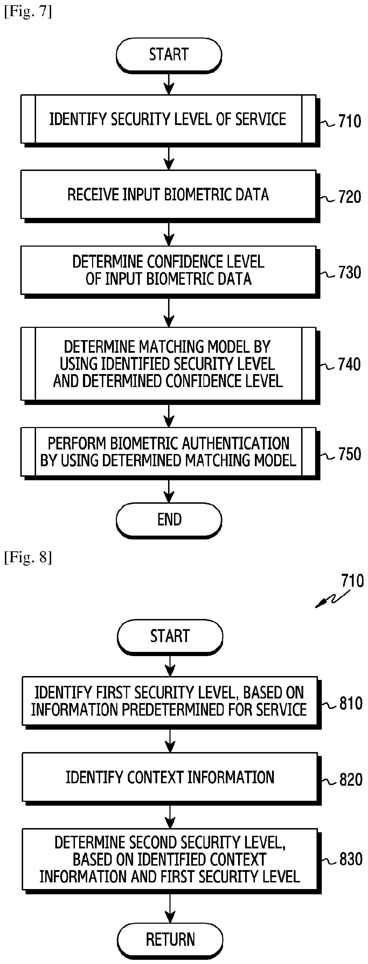

FIG. 7 is a flowchart illustrating an operation of an electronic device according to various embodiments of the disclosure.

According to various embodiments, at least one operation of FIG. 7 may be performed by a processor (e.g., the processor 120 of FIG. 5). Hereinafter, it is described that the processor 120 performs at least one operation of FIG. 7.

In an embodiment, in operation 710, the processor 120 may identify a security level of a service requested to be executed. Although not shown, the processor 120 may receive an execution request for a specific service via an input device (e.g., the input device 150 of FIG. 5) before operation 710 is performed. For example, the processor 120 may identify the security level of the service requested to be executed, as any one of high security or normal security. For another example, the processor 120 may identify the security level of the service requested to be executed, as any one of 'high', 'middle', and 'low'.

In an embodiment, in operation 720, the processor 120 may receive input biometric data. For example, the processor 120 may receive a user's face image or fingerprint image as the input biometric data via a biometric sensor (e.g., the biometric sensor 520 of FIG. 5).

In an embodiment, in operation 730, the processor 120 may determine a confidence level of the input biometric data. The processor 120 may determine the confidence level of the input biometric data based on quality of the input biometric data. The confidence level of the input biometric data may be determined based on a method similar to a method of identifying the security level in operation 710. For example, the processor 120 may determine the confidence level of the input biometric data as any one of two levels (e.g., a normal confidence level and a high confidence level). For another example, the processor 120 may determine the confidence level of the input biometric data as any one of three levels (e.g., a high confidence level, a normal confidence level, a low confidence level).

In an embodiment, in operation 740, the processor 120 may determine a matching model to be used for biometric authentication of the input biometric data based on the identified security level and the determined confidence level. The processor 120 may determine one matching model or a combination of a plurality of matching models to be used for biometric authentication of the input biometric data among the plurality of matching models stored in a memory (e.g., the memory 130 of FIG. 5). For example, the processor 120 may determine at least one matching model among the plurality of matching models based on the identified security level, and may determine one matching model among the at least one matching model based on the determined confidence level.

Although not shown, the processor 120 may determine one matching model among the plurality of matching models based on the identified security level.

In an embodiment, in operation 750, the processor 120 may perform biometric authentication of the input biometric data based on the determined matching model. Although not shown, the processor 120 may execute and provide the service requested to be executed or may restrict the execution of the service requested to be executed, based on a biometric authentication result of the input biometric data.

FIG. 8 is a flowchart illustrating a detailed operation of an electronic device for identifying a security level of a service requested to be executed according to various embodiments of the disclosure.

The flowchart of FIG. 8 may be in accordance with various embodiments of operation 710 of FIG. 7.

In an embodiment, in operation 810, a processor (e.g., the processor 120 of FIG. 5) may identify a first security level based on stored information for a service requested to be executed. For example, the processor 120 may refer to information indicating a correspondence relationship between the service and the security level or a configuration value of the electronic device 200, stored in a memory (e.g., the memory 130 of FIG. 5), or may request authentication from an external server (e.g., a server related to providing of the service requested to be executed) and identify a first security level based on authentication information received from the server.

In an embodiment, in operation 820, the processor 120 may identify context information.

In an embodiment, the context information may be context information related to receiving of a service execution request. The context information may include information (e.g., humidity, temperature information) related to a time, place, and environment at which the service execution request is received. The context information may include information that can be additionally obtained based on the information related to the time, place, and environment at which the service execution request is received. For example, the context information may include information on data exchanged between a user and the electronic device 200 within a designated time from the time at which the service execution request is received.

In an embodiment, in operation 830, the processor 120 may determine a second security level based on the identified context information and information on a first security level. The processor 120 may change or update the first security level to the second security level based on the identified context information (e.g., if the security level is expressed as numeric information, the first security level is increased by a designated ratio or a designated value is added to the first security level). If the identified context information satisfies a designated condition stored in the memory 130 to change or update the first security level, the processor 120 may change or update the first security level to the second security level.

For example, if a place where the input biometric data is input is a designated place (e.g., home or office), the processor 120 may change the security level from the first security level to the second security level higher than the first security level.

For another example, if the place where input biometric data is input is separated by at least a threshold from a place where the user visits occasionally (e.g., if the user's home is in Incheon, the city of South Korea, the user's office is in Seoul, the city of South Korea, and the place where the input biometric data is input is South Africa), the processor 120 may change the security level from the first security level to a third security level lower than the first security level.

For another example, if information (e.g., personal identity information) authenticated from the user is received within a time at which input biometric data is input, the processor 120 may change the security level from the first security level to the second security level higher than the first security level.

In an embodiment, the first security level may be identical or correspond to the second security level. For example, if the identified context information does not satisfy a designated condition stored in the memory 130 to change or update the first security level, the first security level may be maintained without alteration.

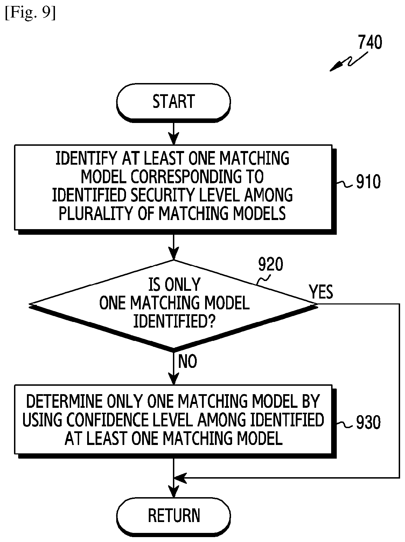

FIG. 9 is a flowchart illustrating an operation of an electronic device for determining a matching model based on an identified security level and a determined confident level according to various embodiments of the disclosure.

The flowchart of FIG. 9 may be in accordance with various embodiments of operation 740 of FIG. 7.

In an embodiment, in operation 910, a processor (e.g., the processor 120 of FIG. 5) may identify at least one matching model corresponding to an identified security among a plurality of matching models. For example, if a security level of a service requested to be executed is identified as a security level 'middle', the processor 120 may identify a matching model B corresponding to a quality level 'middle' and a matching model A corresponding to a quality level 'high' among the plurality of matching models stored in a memory (e.g., the memory 130 of FIG. 5). For another example, if the security level of the service requested to be executed is identified as a security level 'high', the processor 120 may identify the matching model A corresponding to the quality level 'high' among the plurality of matching models stored in the memory 130.

In an embodiment, in operation 920, the processor 120 may determine whether only one matching model is identified. For example, if the security level of the service requested to be executed is identified as the security level 'middle' and thus the matching model B and the matching model A are identified, since it is not a case where only one matching model is identified, the processor may proceed to operation 930.

In an embodiment, if only one matching model is identified (YES in operation 920), the processor 120 may perform operation 750. For example, the processor 120 may perform biometric authentication of input biometric data based on the identified only one matching model.

In an embodiment, if only one matching model is not identified (NO in operation 920), the processor 120 may perform operation 930. In operation 930, the processor 120 may determine only one matching model based on a confidence level among the identified at least one matching model. For example, if the security level of the service requested to be executed is identified as the security level 'middle' and thus the matching model B corresponding to the quality level 'middle' and the matching model A corresponding to the quality level 'high' are identified, the matching model B corresponding to the quality level 'middle' may be finally determined based on the confidence level of the input biometric data.

For example, the matching model B corresponding to the quality level 'middle' may have first biometric data and second biometric data of a confidence level in a designated range (e.g., a range corresponding to 'middle' when classified into 'high', 'middle', and 'low'), and a range of the designated confidence level of the second biometric data may correspond to a quality level of the matching model B. The matching model A corresponding to the quality level 'high' may have the first biometric data, and may not have the second biometric data. If the confidence level of the input biometric data is identified as 'middle', the processor 120 may select the matching model B corresponding to the quality level 'middle'. The reason is that, since the matching model B corresponding to the quality level 'middle' has the second biometric data corresponding to a normal confidence level, biometric authentication of the input biometric data having the normal confidence level may be performed faster through the matching model B rather than the matching model A. For example, although the biometric authentication of the input biometric data having the normal confidence level may be performed through the matching model A or the matching model B, the biometric authentication may be performed faster when using a matching model (e.g., the matching model B) corresponding to the second biometric data having a confidence level of the same or similar level as the confidence level of the input biometric data.

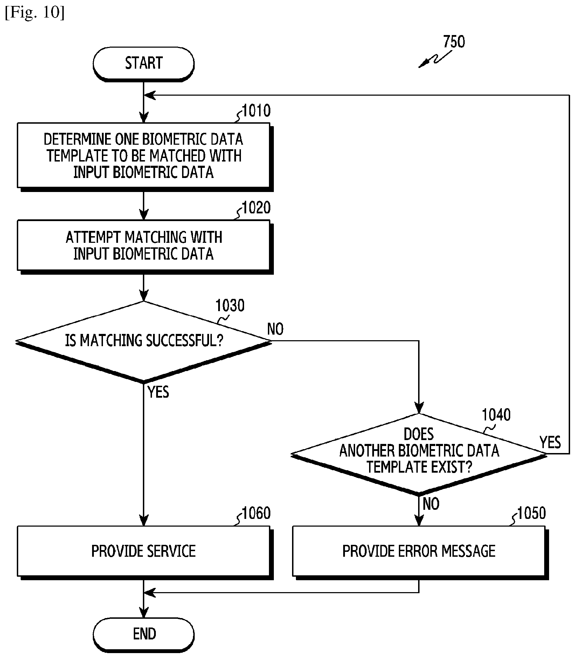

FIG. 10 is a flowchart illustrating a detailed operation of an electronic device for performing biometric authentication of input biometric data based on a determined matching model according to various embodiments of the disclosure.

The flowchart of FIG. 10 may be in accordance with various embodiments of operation 750 of FIG. 7.

In an embodiment, in operation 1010, a processor (e.g., the processor 120 of FIG. 5) may determine one biometric data template to be matched with input biometric data. The processor 120 may determine one biometric data template to be matched with the input biometric data, based on the matching model determined in operation 740. For example, in operation 740, if the matching model B corresponding to 'middle' is determined among quality levels, one biometric data template may be determined among a plurality of biometric data templates corresponding to the matching model B. The processor 120 may determine one biometric data template to be matched with the input biometric data, based on a predetermined criterion or policy (e.g., user's convenience or security) among a plurality of biometric data templates corresponding to the determined matching model. For example, if a relatively higher priority is given to the user convenience rather than the security and if the matching model B corresponding to the quality level 'middle' is selected from among the quality levels, the processor 120 may determine a biometric data template having a lowest confidence level among biometric data templates (or second biometric data templates) corresponding to the matching model B. For another example, if a relatively higher priority is given to the security rather than the user convenience, the processor 120 may determine a biometric data template having a highest confidence level among biometric data templates (or first biometric data templates) corresponding to the matching model B.

In an embodiment, the predetermined criterion may be associated with at least one of a confidence level order, a random order, and the number of times (or frequency in use) of matching achieved so far.

In an embodiment, in operation 1020, the processor 120 may attempt to match the determined biometric data template to the input biometric data. For example, the processor 120 may identify whether the input biometric data and the determined biometric data template have a similarly greater than or equal to a designated value. In an embodiment, the similarity may be set differently according to the security level of the service requested to be executed.

In an embodiment, in operation 1030, the processor 120 may identify whether the matching is successfully performed.

In an embodiment, if the matching is successfully performed (YES in operation 1030), in operation 1060, the processor 120 may provide a service. For example, the processor 120 may execute the service (e.g., application) requested to be executed in operation 710 and provide the service to the user.

In an embodiment, if the matching is not successfully performed (NO in operation 1030), in operation 1040, the processor 120 may identify whether a different biometric data template exists. The processor 120 may identify whether there is a biometric data template not matched with the input biometric data while corresponding to the matching model determined in operation 740.

In an embodiment, if the different biometric data template exists (YES in operation 1040), the processor 120 may perform operation 1010. The processor 120 may determine one biometric data template to be matched with the input biometric data among different biometric data templets which exist.

In an embodiment, if there is no different biometric data (NO in operation 1040), in operation 1050, the processor 120 may provide an error message. For example, the processor 120 may display via a display (e.g., the display device 160 of FIG. 5) a message which suggests an attempt to perform biometric authentication one more time by indicating a failure in the biometric authentication.

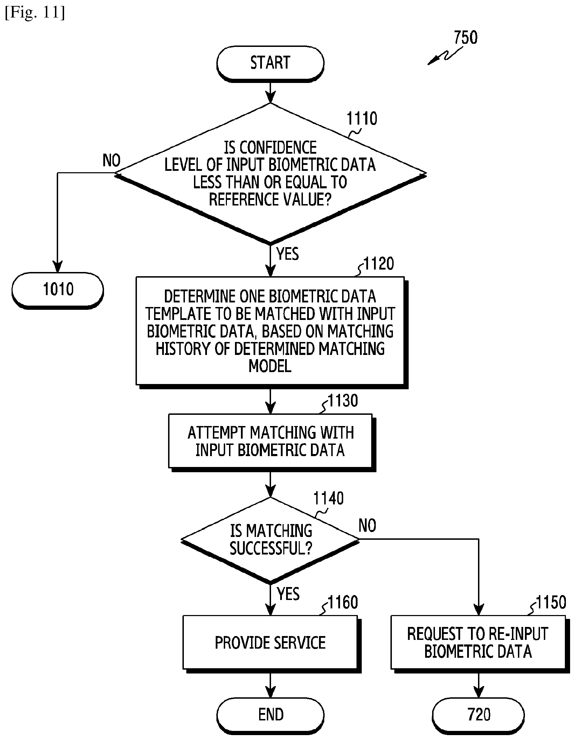

FIG. 11 is a flowchart illustrating a detailed operation of an electronic device for performing biometric authentication of input biometric data based on a determined matching model according to various embodiments of the disclosure.

The flowchart of FIG. 11 may be in accordance with various embodiments of operation 750 of FIG. 7.

In an embodiment, in operation 1110, a processor (e.g., the processor 120 of FIG. 5) may identify whether a confidence level of input biometric data is less than or equal to a reference value. For example, if the confidence level of the biometric data is classified into 'high', 'middle', and 'low', the processor 120 may identify whether the confidence level of the input biometric data corresponds to 'low'. For another example, if the confidence level of the biometric data is classified into a range of 1 to 10, the processor 120 may identify whether the confidence level of the input biometric data is less than or equal to 3.

If the confidence level of the input biometric data is not equal to or less than the reference value (NO in operation 1110), the processor 120 may perform operation 1010.

If the confidence level of the input biometric data is less than or equal to the reference value, in operation 1120, the processor 120 may determine one biometric data template to be matched with the input biometric data, based on a matching history of the determined matching model. If the matching history of the determined matching model satisfies a designated condition, the processor 120 may determine one biometric data template to be matched with the input biometric data. For example, among a plurality of biometric data templates corresponding to the determined matching model, during a specific time period (e.g., within one week from now), if the number of times of successfully performing biometric authentication based on a specific biometric data template is greater than the number of times of successfully performing biometric authentication based on the remaining biometric data templates at least by a threshold, the processor 120 may determine one biometric data template to be matched with input biometric data among the remaining biometric data templates other than the specific biometric data template. For another example, among a plurality of biometric data templates corresponding to the determined matching model, during a specific time period, if the number of times of successfully performing biometric authentication based on a specific biometric data template is greater than the number of times of successfully performing biometric authentication based on the remaining biometric data templates at least by a threshold and if a confidence level of the specific biometric data template is less than or equal to a reference value, the processor 120 may determine one biometric data template to be matched with input biometric data among biometric data templates (e.g., a first biometric data template) having a higher confidence level than the specific biometric data template.

In an embodiment, in operation 1120, one biometric data template to be matched with the input biometric data may correspond to the matching model different from the matching model determined in operation 740. For example, among a plurality of biometric data templates corresponding to the determined matching model, during a specific time period, if the number of times of successfully performing biometric authentication based on a specific biometric data template is greater than the number of times of successfully performing biometric authentication based on the remaining biometric data templates at least by a threshold and if a confidence level of the specific biometric data template is less than or equal to a reference value, the processor 120 may determine one biometric data template among biometric data templates corresponding to a matching model (e.g., a matching model having a higher quality level than the matching model determined in operation 740) different from the matching model determined in operation 740. In this case, the processor 120 may determine a data template having a higher biometric data template than the specific biometric data template.

In an embodiment, in operation 1130, the processor 120 may attempt to match the determined biometric data to the input biometric data. For example, the processor 120 may identify whether the input biometric data and the determined biometric data have a similarly greater than or equal to a designated value.

In an embodiment, in operation 1140, the processor 120 may identify whether the matching is successfully performed.

In an embodiment, if the matching is successfully performed (YES in operation 1140), in operation 1160, the processor 120 may provide a service. For example, the processor 120 may execute the service (e.g., application) requested to be executed in operation 710 and provide the service to the user.

In an embodiment, if the matching is not successfully performed (NO in operation 1140), in operation 1150, the processor 120 may request to re-input the biometric data and may perform operation 720. For example, the processor 120 may request the user to re-input the biometric data, and may newly receive the biometric data. If the biometric data is newly input, a type of the biometric data may be different. For example, if fingerprint data is previously input, the processor 120 may request the user to re-input the biometric data as a face image.

According to the embodiment of FIG. 11, the processor 120 may guarantee a reliability of a matching model having a relatively low quality level. For example, if the matching model having the relatively low quality level has been performing abnormal biometric authentication during a designated time period (e.g., biometric authentication is performed based on mainly a biometric data template corresponding to a relatively low confidence level during the designated time period), matching may be performed based on the biometric data template (e.g., a biometric data template having a higher confidence level) differently or by forcedly adding a scenario of using another matching model.

According to an embodiment, in this matching, if the matching is not successfully achieved, a matching model having a relatively low quality level may be guaranteed by requesting to re-input biometric data.

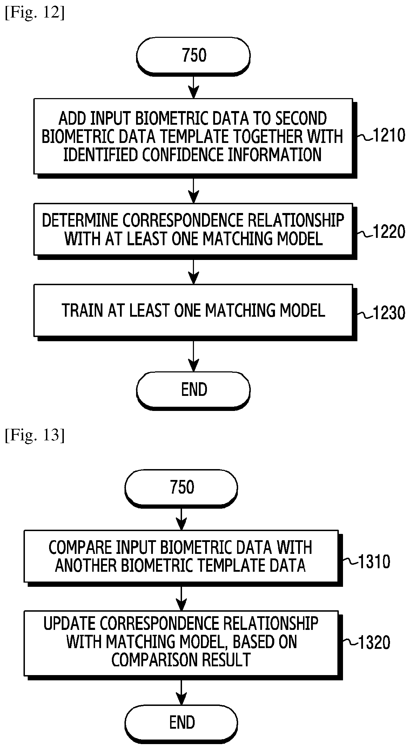

FIG. 12 is a flowchart illustrating a detailed operation of an electronic device for managing input biometric data after performing biometric authentication of the input biometric data according to various embodiments of the disclosure.

Various embodiments of FIG. 12 may be performed after operation 750 of FIG. 7 is performed.

In an embodiment, in operation 1210, a processor (e.g., the processor 120 of FIG. 5) may add input biometric data to a second biometric data template together with identified confidence information. For example, the processor 120 may update the second biometric data template based on the input biometric data and the identified confidence information. Herein, the identified confidence information may be confidence information identified in operation 730. Although not shown, the processor 120 may add not only the identified confidence information but also at least one of a basis or method by which confidence information is computed, matching model information (e.g., a quality level of a matching model) used for biometric authentication of input biometric data, biometric data template information used for biometric authentication (e.g., a confidence level of the biometric data template used in biometric authentication), and information on whether the biometric authentication is successfully performed.

Although not shown, before adding the input biometric data to the second biometric data template, the processor 120 may identify whether a data template having a similarity greater than or equal to a designated value with respect to the input biometric data is included in the second biometric data template, and if it is included, may not include the input biometric data to the second biometric data template.

In an embodiment, in operation 1220, the processor 120 may set a correspondence relationship with at least one matching model. For example, the processor 120 may allow input biometric data to correspond to one matching model among a plurality of matching models stored in a memory (e.g., the memory 130 of FIG. 5). In the determining of one matching model among the plurality of matching models stored in the memory 130, the processor 120 may determine the matching model based on a quality level of the matching model and a confidence level of input biometric data. For example, if a matching model A having a quality level 'high', a matching model B having a quality level 'middle', and a matching model C having a quality level 'low' are stored in the memory 130 and if a confidence level of input biometric data is 'middle', the processor 120 may allow the input biometric data to correspond to the matching model B having the quality level 'middle'.

In an embodiment, in operation 1230, the processor 120 may train or update at least one matching model. The processor 120 may train the at least one matching model based on the input biometric data as training data. The processor 120 may train the at least one matching model of which a correspondence relationship with the input biometric data is set, and may train the remaining matching models of which a correspondence relationship with the input biometric data is not set.

In an embodiment, in the training of the at least one matching model, the processor 120 may produce data from a feature of the input biometric data (e.g., a unique feature of the input biometric data), or may produce data from a difference between the input biometric data and another biometric data template.

In an embodiment, the processor 120 may use the confidence level of the input biometric data to determine at least one matching model to be trained.

In an embodiment, the at least one matching model may be trained to reduce a time used for biometric authentication of input biometric data which is input at a later time.

In an embodiment, before training the at least one matching model, the processor 120 may verify whether the input biometric data can be used as training data. For example, if a confidence level of the input biometric data is greater than or equal to a designated value, the processor 120 may determine that the input biometric data can be used as the training data.

FIG. 13 is a flowchart illustrating a detailed operation of an electronic device for managing input biometric data after performing biometric authentication of the input biometric data according to various embodiments of the disclosure.

Various embodiments of FIG. 13 may be performed after operation 750 of FIG. 7 is performed.

The operations of FIG. 13 may be performed after a correspondence relationship of the input biometric data is set with at least one matching model (e.g., operation 1220 of FIG. 12).

In an embodiment, in operation 1310, a processor (e.g., the processor 120 of FIG. 5) may compare the input biometric data with another biometric data template. For example, if a correspondence relationship of the input biometric data is set with a matching model C corresponding to a quality level 'low', the processor 120 may compare the input biometric data with a biometric data template (e.g., a second biometric data template) corresponding to the matching model B. For another example, if a correspondence relationship of the input biometric data is set with a matching model C corresponding to a quality level 'low', the processor 120 may compare the input biometric data with a different biometric data template corresponding to the matching model C.

In an embodiment, the processor 120 may compare the input biometric data with the different biometric data template based on identifying whether the both have a similarity greater than or equal to a designated value.

In an embodiment, in operation 1320, the processor 120 may update a correspondence relationship with the matching model based on a comparison result. For example, if input biometric data having a correspondence relationship which is set with the matching model C has a value greater than or equal to a first similarity with respect to biometric data template corresponding to the matching model B, the processor 120 may remove a correspondence relationship between the input biometric data and the matching model C or may remove a correspondence relationship between the biometric data template and the matching model B. For another example, if input biometric data having a correspondence relationship which is set with the matching model C has a value greater than or equal to a first similarity with respect to biometric data template corresponding to the matching model B, a new correspondence relationship of the input biometric data may be set with not the matching model C but the matching model B, or a new correspondence relationship of the biometric data template may be set with not the matching model B but the matching model C. For another example, if input biometric data having a correspondence relationship which is set with the matching model C has a value greater than or equal to a second similarity with respect to a different biometric data template corresponding to the matching model B, the processor 120 may remove the correspondence relationship between the input biometric data and the matching model C or the correspondence relationship between the different biometric data template and the matching model C.

In an embodiment, the processor 120 may change a value of a predetermined confidence level, based on a comparison result. For example, if input biometric data having a correspondence relationship which is set with the matching model C corresponding to a quality level 'low' has a value greater than or equal to a third similarity with respect to a biometric data template corresponding to a matching model B corresponding to a quality level 'middle', the processor 120 may change a confidence level of the input biometric data or the biometric data template. The input biometric data or biometric data template of which the confidence level is changed may be excluded in the matching model which has been used as training data up to now, and may be used as training data of a new matching model. As the user continuously performs authentication at a later time, the confidence level of the biometric data may be repeatedly (or persistently) changed.

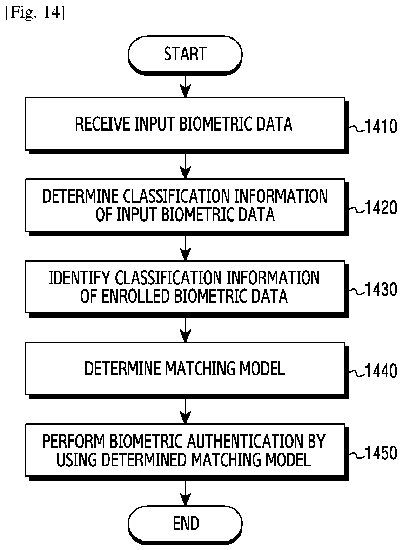

FIG. 14 is a flowchart illustrating an operation of an electronic device according to various embodiments of the disclosure.

According to various embodiments, at least one operation of FIG. 14 may be performed by a processor (e.g., the processor 120 of FIG. 5). Hereinafter, it is described that the processor 120 performs at least one operation of FIG. 14.

In an embodiment, in operation 1410, the processor 120 may receive input biometric data. For example, the processor 120 may receive input biometric data via a biometric sensor (e.g., the biometric sensor 520 of FIG. 5). Although not shown, before receiving the input biometric data, the processor 120 may be requested to execute a specific service (e.g., an application or an unlocking service), and may provide a notification for requesting the user to input the biometric data.

In an embodiment, in operation 1420, the processor 120 may determine classification information of the input biometric data. The classification information of the input biometric data may be based on a predetermined criterion. For example, if the input biometric data is fingerprint image data, the processor 120 may determine the classification information of the input biometric data based on a skin color type or a skin dry type. For another example, if the input biometric data is face image data, the processor 120 may determine the classification information of the input biometric data based on an illumination type. For example, if the input biometric data is fingerprint image data, among a normal type, a dry type, a wet type, and an oil type, the processor 120 may determine the classification information of the input biometric data as the dry type. For another example, if the input biometric data is face image data, among low light, bright light, normal light, and back light, the processor 120 may determine the classification information of the input biometric data as the bright light.

In an embodiment, the processor 120 may use a probability in the determining of the classification information of the input biometric data. For example, if the input biometric data is fingerprint image data, the processor 120 may determine the classification information of the input biometric data as the normal type at a probability of 80%, the dry type at a probability of 10%, and the wet type at a probability of 10%.

In an embodiment, in operation 1430, the processor 120 may identify classification information of enrolled biometric data. For example, the processor 120 may identify the classification information of the enrolled biometric data as the normal type at a probability of 50%, the dry type at a probability of 20%, and the wet type at a probability of 30%.

In an embodiment, in operation 1440, the processor 120 may determine a matching model. The processor 120 may use the classification information of the input biometric data and the classification information of the enrolled biometric data to determine the matching model to be used for biometric authentication of the input biometric data.

In an embodiment, the processor 120 may determine one matching model to be used for biometric authentication of input biometric data among a plurality of matching models stored in a memory (e.g., the memory 130).

In an embodiment, the plurality of matching models stored in the memory 130 may be classified based on a predetermined criterion. The classification criterion of the matching model may correspond to a classification criterion of the input biometric information. For example, the matching models A, B, C, and D may respectively correspond to the normal type, the dry type, the wet type, and the oil type among the skin types, or may be configured to be specialized respectively.

In an embodiment, if the classification information of the input biometric data and the classification information of the enrolled biometric data are implemented based on probabilities, the processor 120 may determine one matching model based on an average of probabilities corresponding to the same type. For example, if the classification information of the input biometric data is determined as the normal type at a probability of 80%, the dry type at a probability of 10%, and the wet type at a probability of 10%, and the classification information of the enrolled biometric data is determined as the normal type at a probability of 50%, the dry type at a probability of 20%, and the wet type at a probability of 30%, the processor 120 may determine a probability of corresponding to the normal type as 65%, a probability of corresponding to the dry type as 15%, and a probability of corresponding to the wet type as 20% based on an average of probabilities corresponding to the same type, and may determine a matching model A corresponding to the normal type having the highest probability.

In an embodiment, in operation 1450, the processor 120 may perform biometric authentication based on the determined matching model. The processor 120 may input the input biometric data to the determined matching model, and may compare the input biometric data with a biometric data template corresponding to the determined matching model.

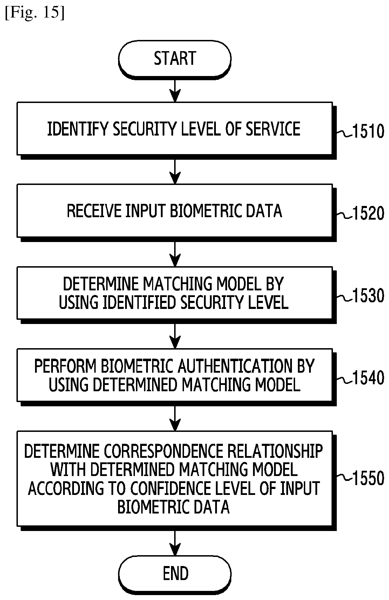

FIG. 15 is a flowchart illustrating an operation of an electronic device according to various embodiments of the disclosure.

According to various embodiments, at least one operation of FIG. 15 may be performed by a processor (e.g., the processor 120 of FIG. 5). Hereinafter, it is described that the processor 120 performs at least one operation of FIG. 15.

However, since operation 1510, operation 1520, and operation 1540 are almost similar respectively to operation 710 of FIG. 7, operation 720 of FIG. 7, and operation 740 of FIG. 7, descriptions thereof will be omitted.

In an embodiment, in operation 1530, the processor 120 may use an identified security level to determine a matching model to be used for authentication of received user's biometric data among a plurality of matching models. For example, if a security level of a service requested to be executed is identified as 'high', the processor 120 may determine a matching model having a quality level 'high'. For another example, if the security level of the service requested to be executed is identified as 'low', the processor 120 may determine a matching model having a quality level 'low'. In other words, the processor 120 may determine the matching model, based on the service requested to be executed, not based on a confidence level of the received user's biometric data.

In an embodiment, in operation 1550, the processor 120 may set a correspondence relationship between the received user's biometric data and the matching model determined according to the confidence level of the received user's biometric data among the plurality of matching models. The matching model determined according to the confidence level of the received user's biometric data may be different from the matching model determined in operation 1530. For example, if a matching model having a quality level 'low' is determined in operation 1530, the processor 120 may set a correspondence relationship between the user's biometric data and a matching model having a quality level 'middle' determined according to the confidence level (e.g., 'middle') of the user's biometric data. That is, to execute a service requiring a low security level, if biometric data having a relatively high confidence level is input, biometric authentication may be performed through a matching model having a low quality level. However, the input biometric data may be configured to have a correspondence relationship with a matching model having a relatively high quality level.

An electronic device and an operating method thereof according to various embodiments apply a scheme of updating or recognizing user's reference biometric information variably depending on a situation, thereby obtaining a more optimal result depending on a user input, and decreasing a misrecognition rate which occurs when a biometric data template is excessively extended.

The computer-readable storage media may include a hard disk, a floppy disk, magnetic media (e.g., a magnetic tape), optical media (e.g., a Compact Disc-ROM (CD-ROM), a Digital Versatile Disc (DVD), magnetic-optic media (e.g., a floptical disk)), an internal memory, or the like. The instruction may include a code created by a compiler or a code executable by an interpreter. The module or programming module according to various embodiments may further include at least one or more constitutional elements among the aforementioned constitutional elements, or may omit some of them, or may further include additional other constitutional elements. According to various embodiments, operations performed by a module, programming module, or other constitutional elements may be executed in a sequential, parallel, repetitive, or heuristic manner. At least some of the operations may be executed in a different order or may be omitted, or other operations may be added.

Although the present disclosure has been described with various embodiments, various changes and modifications may be suggested to one skilled in the art.

## Claims

1. An electronic device (200) comprising:
a biometric sensor (520);
a memory (130); and
a processor (120) operatively coupled with the biometric sensor (520),
wherein the processor (120) is configured to:
identify a security level of a service requested to be executed,
determine a confidence level of biometric data received via the biometric sensor (520), wherein the confidence level indicates data quality of the biometric data received via the biometric sensor (520),
determine one matching model among a plurality of matching models stored in the memory (130) to be used to authenticate the received biometric data based on the identified security level and the determined confidence level, wherein one matching model corresponds to a first biometric data template indicating biometric data which is input when the biometric information is enrolled, and at least one of the plurality of matching models corresponds to at least part of a second biometric data template, wherein the second biometric data template indicates biometric data which is input when biometric authentication is attempted;
authenticate the received biometric data based on determined one matching model, wherein the one matching model comprises the first biometric data template or comprises the first biometric data template and the second biometric data template;
store the biometric data for which an authentication is performed in a database so as to function as a biometric data template.

2. The electronic device (200) of claim 1, wherein:
each of the plurality of matching models has a quality level; and
a quality level of a specific matching model is determined according to a confidence level of a biometric data template corresponding to the specific matching model.

3. The electronic device (200) of claim 2, wherein, in the determining of the matching model to be used to authenticate the received biometric data based on the identified security level and the determined confidence level, the processor (120) is further configured to:
determine at least one matching model among the plurality of matching models based on the identified security level; and
determine one matching model among the determined at least one matching model based on the determined confidence level.

4. The electronic device (200) of claim 3, wherein, in the determining of one matching model among the determined at least one matching model based on the determined confidence level, the processor (120) is further configured to determine one matching model corresponding to a biometric data template of a confidence level corresponding to the determined confidence level.

5. The electronic device (200) of claim 1, wherein, in the identifying of the security level of the service requested to be executed, the processor (120) is further configured to:
identify a first security level for the service requested to be executed based on predetermined information;
identify context information related to the execution request; and
determine a second security level based on the identified context information and the first security level.

6. The electronic device (200) of claim 1, wherein, in the authenticating of the received user's biometric data based on the determined matching model, the processor (120) is further configured to:
determine a biometric data template having a higher confidence level than the determined confidence level based on:
the determined confidence level being less than or equal to a predetermined reference value, and
a matching history of the determined matching model satisfying a designated condition;
attempt biometric authentication based on the determined biometric data template, and
request to re-input biometric data based on the biometric authentication not successfully being performed.

7. The electronic device (200) of claim 1, wherein the processor (120) is further configured to set a correspondence relationship between the biometric data and at least one matching model.

8. A method of operating an electronic device (200), the method comprising:
using a processor (120):
identifying a security level of a service requested to be executed;
determining a confidence level of biometric data, wherein the confidence level indicates data quality of the biometric data received via a biometric sensor (520) operatively coupled with the processor (120);
determining one matching model among a plurality of matching models stored in a memory (130) to be used to authenticate the biometric data based on the identified security level and the determined confidence level, wherein one matching model corresponds to a first biometric data template indicating biometric data which is input when the biometric information is enrolled, and at least one of the plurality of matching models corresponds to at least part of a second biometric data template, wherein the second biometric data template indicates a user's biometric data which is input when biometric authentication is attempted;
authenticating the biometric data based on determined one matching model, wherein the one matching model comprises the first biometric data template or comprises the first biometric data template and the second biometric data template;
store the biometric data for which an authentication is performed in a database so as to function as a biometric data template.

9. The method of claim 8, wherein:
each of the plurality of matching models has a quality level; and
a quality level of a specific matching model is determined according to a confidence level of a biometric data template corresponding to the specific matching model.

## Patentansprüche

1. Elektronische Vorrichtung (200) umfassend:
einen biometrischen Sensor (520);
einen Speicher (130); und
einen Prozessor (120), der funktionsfähig mit dem biometrischen Sensor (520) gekoppelt ist,
wobei der Prozessor (120) zu Folgendem konfiguriert ist:
Identifizieren eines Sicherheitsniveaus eines Dienstes, dessen Ausführung angefordert wird,
Bestimmen eines Konfidenzniveaus von biometrischen Daten, die über den biometrischen Sensor (520) empfangen werden, wobei das Konfidenzniveau eine Datenqualität der biometrischen Daten angibt, die über den biometrischen Sensor (520) empfangen werden,
Bestimmen eines Übereinstimmungsmodells aus einer Vielzahl von Übereinstimmungsmodellen, die in dem Speicher (130) gespeichert sind, um verwendet zu werden, um die empfangenen biometrischen Daten basierend auf dem identifizierten Sicherheitsniveau und dem bestimmten Konfidenzniveau zu authentifizieren, wobei ein Übereinstimmungsmodell einer ersten biometrischen Datenvorlage entspricht, die biometrische Daten angibt, die eingegeben werden, wenn die biometrischen Informationen registriert werden, und mindestens eines der Vielzahl von Übereinstimmungsmodellen mindestens einem Teil einer zweiten biometrischen Datenvorlage entspricht, wobei die zweite biometrische Datenvorlage biometrische Daten angibt, die eingegeben werden, wenn eine biometrische Authentifizierung versucht wird;
Authentifizieren der empfangenen biometrischen Daten basierend auf einem bestimmten einen Übereinstimmungsmodell, wobei das eine Übereinstimmungsmodell die erste biometrische Datenvorlage umfasst oder die erste biometrische Datenvorlage und die zweite biometrische Datenvorlage umfasst;
Speichern der biometrischen Daten, für die eine Authentifizierung durchgeführt wird, in einer Datenbank, um als biometrische Datenvorlage zu fungieren.

2. Elektronische Vorrichtung (200) nach Anspruch 1, wobei:
jedes der Vielzahl von Übereinstimmungsmodellen ein Qualitätsniveau aufweist; und
ein Qualitätsniveau eines spezifischen Übereinstimmungsmodells gemäß einem Konfidenzniveau einer biometrischen Datenvorlage bestimmt wird, die dem spezifischen Übereinstimmungsmodell entspricht.

3. Elektronische Vorrichtung (200) nach Anspruch 2, wobei der Prozessor (120) beim Bestimmen des Übereinstimmungsmodells, das zum Authentifizieren der empfangenen biometrischen Daten basierend auf dem identifizierten Sicherheitsniveau und dem bestimmten Konfidenzniveau verwendet wird, ferner zu Folgendem konfiguriert ist:
Bestimmen mindestens eines Übereinstimmungsmodells aus der Vielzahl von Übereinstimmungsmodellen basierend auf dem identifizierten Sicherheitsniveau; und
Bestimmen eines Übereinstimmungsmodells aus dem bestimmten mindestens einen Übereinstimmungsmodell basierend auf dem bestimmten Konfidenzniveau.

4. Elektronische Vorrichtung (200) nach Anspruch 3, wobei der Prozessor (120) beim Bestimmen eines Übereinstimmungsmodells aus dem bestimmten mindestens einen Übereinstimmungsmodell basierend auf dem bestimmten Konfidenzniveau ferner konfiguriert ist, um ein Übereinstimmungsmodell zu bestimmen, das einer biometrischen Datenvorlage mit einem Konfidenzniveau entspricht, das dem bestimmten Konfidenzniveau entspricht.

5. Elektronische Vorrichtung (200) nach Anspruch 1, wobei der Prozessor (120) beim Identifizieren des Sicherheitsniveaus des Dienstes, dessen Ausführung angefordert wird, ferner zu Folgendem konfiguriert ist:
Identifizieren eines ersten Sicherheitsniveaus für den Dienst, dessen Ausführung angefordert wird, basierend auf vorbestimmten Informationen;
Identifizieren von Kontextinformationen in Bezug auf die Ausführungsanforderung; und
Bestimmen eines zweiten Sicherheitsniveaus basierend auf den identifizierten Kontextinformationen und dem ersten Sicherheitsniveau.

6. Elektronische Vorrichtung (200) nach Anspruch 1, wobei der Prozessor (120) beim Authentifizieren der empfangenen biometrischen Daten des Benutzers basierend auf dem bestimmten Übereinstimmungsmodell ferner zu Folgendem konfiguriert ist:
Bestimmen einer biometrischen Datenvorlage, die ein höheres Konfidenzniveau als das bestimmte Konfidenzniveau aufweist, basierend darauf:
dass das bestimmte Konfidenzniveau kleiner als oder gleich wie ein vorbestimmter Referenzwert ist, und
dass eine Übereinstimmungshistorie des bestimmten Übereinstimmungsmodells eine bezeichnete Bedingung erfüllt;
Versuchen einer biometrischen Authentifizierung basierend auf der bestimmten biometrischen Datenvorlage, und
Auffordern zur erneuten Eingabe biometrischer Daten, basierend darauf, dass die biometrische Authentifizierung nicht erfolgreich durchgeführt wurde.

7. Elektronische Vorrichtung (200) nach Anspruch 1, wobei der Prozessor (120) ferner konfiguriert ist, um eine Korrespondenzbeziehung zwischen den biometrischen Daten und mindestens einem Übereinstimmungsmodell festzulegen.

8. Verfahren zum Betreiben einer elektronischen Vorrichtung (200), das Verfahren umfassend:
unter Verwendung eines Prozessors (120):
Identifizieren einer Sicherheitsstufe eines Dienstes, dessen Ausführung angefordert wird;
Bestimmen eines Konfidenzniveaus biometrischer Daten, wobei das Konfidenzniveau eine Datenqualität der biometrischen Daten angibt, die über einen biometrischen Sensor (520) empfangen werden, der funktionsfähig mit dem Prozessor (120) gekoppelt ist;
Bestimmen eines Übereinstimmungsmodells aus einer Vielzahl von Übereinstimmungsmodellen, die in einem Speicher (130) gespeichert sind, um verwendet zu werden, um die biometrischen Daten basierend auf dem identifizierten Sicherheitsniveau und dem bestimmten Konfidenzniveau zu authentifizieren, wobei ein Übereinstimmungsmodell einer ersten biometrischen Datenvorlage entspricht, die biometrische Daten angibt, die eingegeben werden, wenn die biometrischen Informationen registriert werden, und mindestens eines der Vielzahl von Übereinstimmungsmodellen mindestens einem Teil einer zweiten biometrischen Datenvorlage entspricht, wobei die zweite biometrische Datenvorlage biometrische Daten eines Benutzers angibt, die eingegeben werden, wenn eine biometrische Authentifizierung versucht wird;
Authentifizieren der biometrischen Daten basierend auf einem bestimmten einen Übereinstimmungsmodell, wobei das eine Übereinstimmungsmodell die erste biometrische Datenvorlage umfasst oder die erste biometrische Datenvorlage und die zweite biometrische Datenvorlage umfasst;
Speichern der biometrischen Daten, für die eine Authentifizierung durchgeführt wird, in einer Datenbank, um als biometrische Datenvorlage zu fungieren.

9. Verfahren nach Anspruch 8, wobei:
jedes der Vielzahl von Übereinstimmungsmodellen ein Qualitätsniveau aufweist; und
ein Qualitätsniveau eines spezifischen Übereinstimmungsmodells gemäß einem Konfidenzniveau einer biometrischen Datenvorlage bestimmt wird, die dem spezifischen Übereinstimmungsmodell entspricht.

## Revendications

1. Dispositif électronique (200) comprenant :
un capteur biométrique (520) ;
une mémoire (130) ; et
un processeur (120) couplé de manière fonctionnelle au capteur biométrique (520),
dans lequel le processeur (120) est configuré pour :
identifier un niveau de sécurité d'un service dont l'exécution est demandée,
déterminer un niveau de confiance des données biométriques reçues via le capteur biométrique (520), dans lequel le niveau de confiance indique la qualité de données des données biométriques reçues via le capteur biométrique (520),
déterminer un modèle de correspondance parmi une pluralité de modèles de correspondance stockés dans la mémoire (130) à utiliser pour authentifier les données biométriques reçues sur la base du niveau de sécurité identifié et du niveau de confiance déterminé, dans lequel un modèle de correspondance correspondant à un premier modèle de données biométriques indiquant des données biométriques qui sont entrées lorsque les informations biométriques sont enregistrées, et au moins l'un de la pluralité de modèles de correspondance correspond à au moins une partie d'un second modèle de données biométriques, dans lequel le second modèle de données biométriques indique des données biométriques qui sont entrées lorsque l'authentification biométrique est tentée ;
authentifier les données biométriques reçues sur la base de l'un modèle de correspondance déterminé, dans lequel ce modèle de correspondance comprend le premier modèle de données biométriques ou comprend le premier modèle de données biométriques et le second modèle de données biométriques ;
stocker les données biométriques pour lesquelles une authentification est effectuée dans une base de données de manière à s'en servir de modèle de données biométriques.

2. Dispositif électronique (200) selon la revendication 1, dans lequel :
chacun de la pluralité de modèles de correspondance comporte un niveau de qualité ; et
un niveau de qualité d'un modèle de correspondance spécifique est déterminé en fonction d'un niveau de confiance d'un modèle de données biométriques correspondant au modèle de correspondance spécifique.

3. Dispositif électronique (200) selon la revendication 2, dans lequel, lors de la détermination du modèle de correspondance à utiliser pour authentifier les données biométriques reçues sur la base du niveau de sécurité identifié et du niveau de confiance déterminé, le processeur (120) est en outre configuré pour :
déterminer au moins un modèle de correspondance parmi la pluralité de modèles de correspondance sur la base du niveau de sécurité identifié ; et
déterminer un modèle de correspondance parmi l'au moins un modèle de correspondance déterminé sur la base du niveau de confiance déterminé.

4. Dispositif électronique (200) selon la revendication 3, dans lequel, lors de la détermination d'un modèle de correspondance parmi l'au moins un modèle de correspondance déterminé sur la base du niveau de confiance déterminé, le processeur (120) est en outre configuré pour déterminer un modèle de correspondance correspondant à un modèle de données biométriques d'un niveau de confiance correspondant au niveau de confiance déterminé.

5. Dispositif électronique (200) selon la revendication 1, dans lequel, lors de l'identification du niveau de sécurité du service dont l'exécution est demandée, le processeur (120) est en outre configuré pour :
identifier un premier niveau de sécurité pour le service dont l'exécution est demandée sur la base d'informations prédéterminées ;
identifier des informations de contexte liées à la demande d'exécution ; et
déterminer un second niveau de sécurité sur la base des informations de contexte identifiées et du premier niveau de sécurité.

6. Dispositif électronique (200) selon la revendication 1, dans lequel, lors de l'authentification des données biométriques de l'utilisateur reçues sur la base du modèle de correspondance déterminé, le processeur (120) est en outre configuré pour :
déterminer un modèle de données biométriques comportant un niveau de confiance supérieur au niveau de confiance déterminé sur la base de :
le niveau de confiance déterminé étant inférieur ou égal à une valeur de référence prédéterminée, et
un historique de correspondance du modèle de correspondance déterminé satisfaisant une condition désignée ;
une tentative d'authentification biométrique sur la base du modèle de données biométriques déterminé, et
une demande de ré-saisie des données biométriques sur la base du fait que l'authentification biométrique n'a pas été effectuée avec succès.

7. Dispositif électronique (200) selon la revendication 1, dans lequel le processeur (120) est en outre configuré pour établir une relation de correspondance entre les données biométriques et au moins un modèle de correspondance.

8. Procédé de fonctionnement d'un dispositif électronique (200), le procédé comprenant :
à l'aide d'un processeur (120) :
l'identification d'un niveau de sécurité d'un service dont l'exécution est demandée ;
la détermination d'un niveau de confiance de données biométriques, dans lequel le niveau de confiance indique une qualité de données des données biométriques reçues via un capteur biométrique (520) couplé de manière fonctionnelle au processeur (120) ;
la détermination d'un modèle de correspondance parmi une pluralité de modèles de correspondance stockés dans une mémoire (130) à utiliser pour authentifier les données biométriques sur la base du niveau de sécurité identifié et du niveau de confiance déterminé, dans lequel un modèle de correspondance correspond à un premier modèle de données biométriques indiquant des données biométriques qui sont entrées lorsque les informations biométriques sont enregistrées, et au moins l'un de la pluralité de modèles de correspondance correspond à au moins une partie d'un second modèle de données biométriques, dans lequel le second modèle de données biométriques indique des données biométriques d'un utilisateur qui sont entrées lorsque l'authentification biométrique est tentée ;
l'authentification des données biométriques sur la base d'un modèle de correspondance déterminé, dans lequel ce modèle de correspondance comprend le premier modèle de données biométriques ou comprend le premier modèle de données biométriques et le second modèle de données biométriques ;
le stockage des données biométriques pour lesquelles une authentification est effectuée dans une base de données de manière à s'en servir de modèle de données biométriques.

9. Procédé selon la revendication 8, dans lequel :
chacun de la pluralité de modèles de correspondance comporte un niveau de qualité ; et
un niveau de qualité d'un modèle de correspondance spécifique est déterminé en fonction d'un niveau de confiance d'un modèle de données biométriques correspondant au modèle de correspondance spécifique.
